# EUROPÄISCHE PATENTSCHRIFT

(11) **EP 2 596 144 B1**
(45) Veröffentlichungstag und Bekanntmachung des Hinweises auf die Patenterteilung: **20.09.2017**
(21) Anmeldenummer: 11729088.2
(22) Anmeldetag: 20.06.2011
(51) Int. Cl.: C23C 4/06, C22C 38/42, C22C 33/02

(54) **KOLBENRING MIT THERMISCH GESPRITZTER BESCHICHTUNG UND HERSTELLUNGSVERFAHREN DAVON**
PISTON RING WITH THERMALLY SPRAYED COATING AND ITS MANUFACTURING METHODE
SEGMENT DE PISTON AVEC UNE COUCHE DEPOSÉE PAR PROJECTION THEMIQUE ET SON PROCÉDÉ DE FABRICATION

(30) Priorität: 22.07.2010 DE 102010038289
(43) Veröffentlichungstag der Anmeldung: 29.05.2013
(73) Patentinhaber: Federal-Mogul Burscheid GmbH, 51399 Burscheid (DE)
(72) Erfinder: Kennedy, Marcus, 40479 Düsseldorf (DE); Zinnabold, Michael, 51399 Burscheid (DE); Matz, Marc-Manuel, 86438 Kissing (DE)
(74) Vertreter: Becker Kurig Straus
(86) Internationale Anmeldenummer: PCT/EP2011/060243
(87) Internationale Veröffentlichungsnummer: WO 2012/010376

(56) Entgegenhaltungen:
- WO-A1-2008/017848
- WO-A2-02/24970
- WO-A2-03/104511
- US-A- 3 617 349

## Beschreibung

Die vorliegende Erfindung betrifft ein Spritzpulver für thermisches Spritzen sowie einen Kolbenring mit einer thermisch gespritzten Beschichtung und insbesondere Festschmierstoffe einschließend.

Die Verwendung von thermischen Spritzschichten als Verschleißschutzschicht für Gleitelemente ist in vielen Industriebereichen üblich. Bei Anwendungen für Motoren werden unter Anderem thermische Spritzschichten bevorzugt in der ersten und zweiten Nut auf Kolbenringen eingesetzt. In zunehmendem Maße fokussiert sich die Entwicklung auf Eisen-basierte Materialien, um hinsichtlich der physikalischen Eigenschaften und der Kosten den Anforderungen im Motorbetrieb gerecht zu werden.

Die Laufpartner für Kolbenringe basierend oft ebenfalls auf Eisen. Dies erhöht das Risiko der Brandspurbildung bis hin zum Fressen, da es durch gleichartige Metalle unter gewissen Grenzbedingungen (Mangelschmierung und hohe Temperaturen) zu adhäsivem Verschleiß kommt.

Demnach ist ein Schichtsystem zu entwickeln, das die mögliche Fressneigung Eisen-basierter Spritzschichten reduziert, sowie eine ausreichende Zähigkeit besitzt, um eine Materialermüdung hei konstant hoher thermischer Belastung zu vermeiden.

Eisen-basierte Beschichtungen, aufgetragen mittels Thermischen Spritzens finden noch keine Anwendung auf dem Kolbenring, im Bereich des Kurbeltriebs sind bisher lediglich Eisen-basierte Beschichtungen auf der Zylinderlaufbahn bekannt, hergestellt mittels Lichtbogen-Draht-Spritzens (LDS).

Die Herstellung von Verschleißschutzschichten mittels des thermischen Spritzprozesses ist ein grundsätzlich bekanntes Verfahren. Die heutigen dafür verwendeten Pulvermaterialien basieren auf Molybdän, Wolfram-Karbid, Nickel-Chrom und Cr₃C₂. Hohe Karbidanteile führen aber zu einer Verschlechterung der Ermüdungsfestigkeit sowie der Bruchzähigkeit. Aufgrund der hohen Molybdän-Marktpreise sind mittelfristig Alternativen notwendig.

Um die oben beschriebene Aufgabe zu lösen soll die Beschichtung folgende Merkmale aufweisen:
1) Ähnliche physikalische Eigenschaften wie das zu beschichtende Substrat;
2) Ausreichende Verschleißresistenz für das System "thermisch gespritzter Kolbenring mit Eisen-basierter Zylinderlaufbahn, geschmiert";
3) Ausreichende Brandspur- und Fressbeständigkeit;
4) Ausreichende Bruchzähigkeit und dadurch verbessertes Ermüdungsverhalten.

Gemäß einem ersten Aspekt der Erfindung wird daher ein Pulver zur Herstellung eines Kolbenrings für eine Verbrennungskraftmaschine bereitgestellt, bestehend aus denn Elementanteile
15-30 Gewichtsprozent Eisen, Fe;
15-30 Gewichtsprozent Wolfram, W;
25-35 Gewichtsprozent Chrom, Cr;
10-35 Gewichtsprozent Nickel, Ni;
1-5 Gewichtsprozent Molybdän, Mo;
0,2-3 Gewichtsprozent Aluminium, Al;
3-20 Gewichtsprozent Kupfer, Cu;
1-10 Gewichtsprozent Kohlenstoff, C;
0,1-2 Gewichtsprozent Schwefel, S; und
0,1-2 Gewichtsprozent Silizium, Si.

Hinsichtlich der physikalischen Eigenschaften (Wärmeleitfähigkeit, thermischer Ausdehnungskoeffizient) entsteht durch einen Mindestanteil des Eisen-haltigen Basissystems von 15 Gewichtsprozent ein quasi-homogenes System zwischen Substrat und Beschichtung. Dadurch kann die während der Mischreibung, insbesondere im Bereich des oberen bzw. unteren Totpunkts (OT/UT), entstehende thermische Energie besser abgeführt und ein gleichmäßiger thermischer Relaxationsprozess durch die im Motor vorliegenden Temperaturschwankungen gewährleistet werden.

Grundsätzlich besteht das gesamte System aus den folgenden Elementen: Eisen (Fe), Wolfram (W, als WC oder WS₂), Chrom (Cr, als Cr und Cr₃C₂), Nickel (Ni), Molybdän (als Mo oder MoS₂), Silizium (Si) und Kohlenstoff (C, teilweise gebunden in Fe, W und Cr als Karbid). Die Anwendung von Fe-Basis-Legierungen als Kolbenringbasisbeschichtungsmaterial zusammen mit einem karbidischen System führt zur Herstellung eines neuen Kolbenringtyps.

Gemäß einer Ausführungsform enthält das Pulver einen Anteil von 20-50 Gewichtsprozent Karbide mit den folgenden Konzentrationen:
10-30 Gewichtsprozent Wolframkarbid, WC; und
5-20 Gewichtsprozent Cr₃C₂.

Gemäß einer Ausführungsform enthält das Pulver Festschmierstoffe, die AlCuFe, MoS₂, WS₂ oder Gemische daraus umfassen. Bevorzugt beträgt der Anteil an Festschmierstoffen an dem Pulver 5-20 Gewichtsprozent, aufgeteilt in die folgenden Anteile:
0-20 Gewichtsprozent AlCuFe;
0-5 Gewichtsprozent MoS₂; und
0-5 Gewichtsprozent WS₂.

Die Eisenbasislegierung ohne Karbide oder mit höheren Feststoffschmieranteilen ist nicht zu empfehlen, da der Verschleißwiderstand zu gering wird.

Gemäß einer Ausführungsform enthalten die Festschmierstoffe AlCuFe mit den folgenden Konzentrationen:
80-95 Gewichtsprozent Cu;
5-20 Gewichtsprozent Al;
1-5 Gewichtsprozent Fe; und
0,1-3 Gewichtsprozent Sauerstoff, O.

Gemäß einer Ausführungsform beträgt der WS₂-Anteil 1,5-3,5 Gewichtsprozent und das WS₂ ist in eine Nickelmatrix eingebettet.

Gemäß einer Ausführungsform beträgt der MoS₂-Anteil 1-2,5 Gewichtsprozent und das MoS₂ ist in eine Nickelmatrix eingebettet.

Gemäß einer Ausführungsform liegen die Partikelgrößen des Pulvers im Bereich 1-100 µm.

Gemäß einer Ausführungsform liegen die Partikelgrößen der Festschmierstoffe im Bereich 1-150 µm.

Gemäß einer Ausführungsform sind die Karbide in einer NiCr-Matrix eingebettet und weisen eine Partikelgröße von 0,5-5 µm auf.

Gemäß einer Ausführungsform liegt die Schichtdicke der Beschichtung im Bereich von 20-1000 µm.

Gemäß einer Ausführungsform umfasst das thermische Spritzverfahren Hochgeschwindigkeits-Flammspritzen oder Plasmaspritzen.

Gemäß einer Ausführungsform liegt die Härte einer erfindungsgemäß hergestellten Beschichtung im Bereich von 500-1000 HV0.1 µm.

Gemäß einer Ausführungsform liegt die Bruchzähigkeit einer erfindungsgemäß hergestellten Beschichtung im Bereich von 2,5-7,5 (MPa m)^{1/2}.

Gemäß einer Ausführungsform ist der Kolbenring ein Guss- oder Stahlkolbenring.

Gemäß einem zweiten Aspekt der Erfindung wird ein Kolbenring bereitgestellt, hergestellt mit einem Verfahren wie vorstehend beschrieben.

Kurze Beschreibung der Zeichnung
- Fig. 1: zeigt eine Mikrostrukturaufnahme (500:1) einer thermisch gespritzten Schicht gemäß einer ersten Ausführungsform;
- Fig. 2: zeigt eine Mikrostrukturaufnahme (500:1) einer thermisch gespritzten Schicht gemäß einer zweiten Ausführungsform;
- Fig. 3: zeigt eine Mikrostrukturaufnahme (500:1) einer thermisch gespritzten Schicht gemäß einer dritten Ausführungsform; und
- Fig. 4: zeigt eine Mikrostrukturaufnahme (500:1) einer thermisch gespritzten Schicht gemäß einer vierten Ausführungsform.

### Detaillierte Beschreibung der Erfindung

### Durchgeführte Versuche:

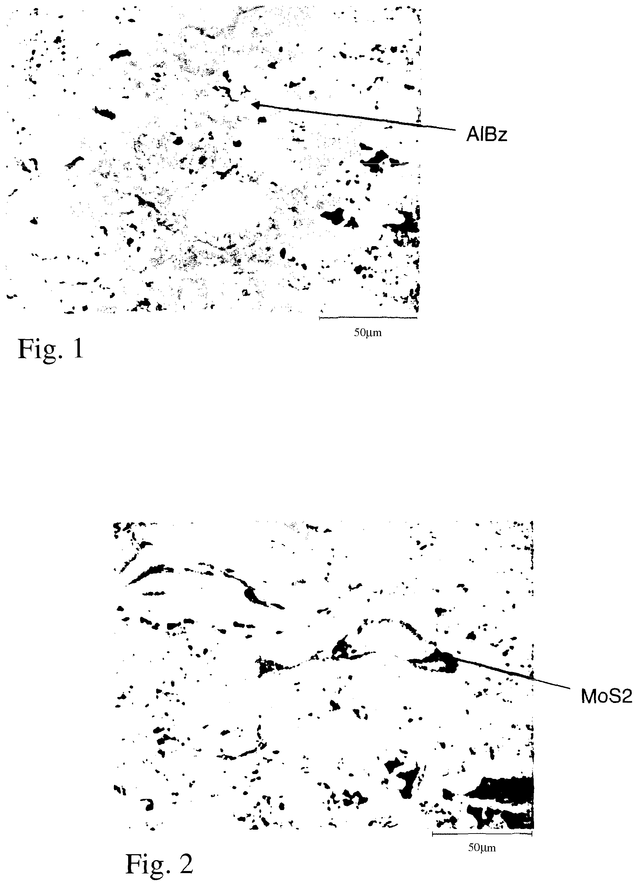

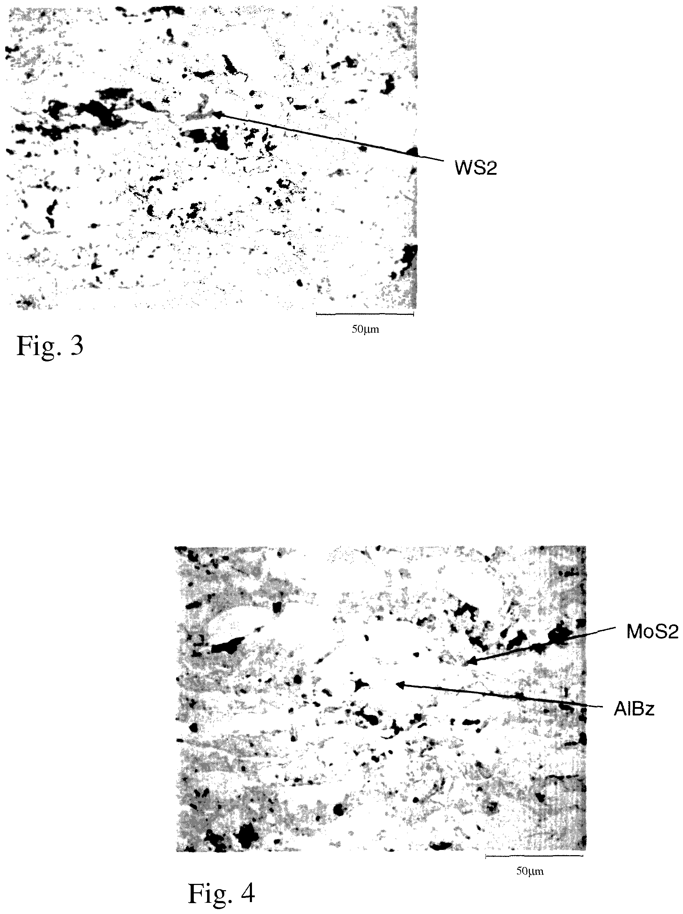

Das Pulver wurde mittels Hochgeschwindigkeits-Flammspritzen (high velocity oxy fuel, HVOF) thermisch gespritzt und für verschiedene Varianten wurden die chemische Zusammensetzung (Tab. 1), Mikrostruktur (Fig. 1-4), Porösität und Härte (Tab. 2) gemessen. Bei allen verwendeten Pulvern lag der Gesamtkarbidanteil bei ca. 40 Gewichtsprozent.

Tabelle 1 zeigt die chemische Zusammensetzung sowie den Anteil an Festschmierstoffen der im Test verwendeten Schichtsysteme, wobei die Proben 1 bis 4 außerhalb des Umfangs der Erfindung liegen.

**Tabelle 1: Chemische Zusammensetzung der verschiedenen Schichtsysteme**

| **Versu ch** | **Festschmierstoff** | **Anteil Fest-** | **Chemische Zusammensetzung** | | | | | | | | | |
|---|---|---|---|---|---|---|---|---|---|---|---|---|
| | | | **Fe** | **W** | **Cr** | **Ni** | **Mo** | **Al** | **Cu** | **S** | **C** | **Si** |
| **#** | | **(Gew%** | **(Gew%)** | | | | | | | | | |
| **1** | - | - | 24 | 23 | 33 | 12 | 2,6 | - | - | - | 4,9 | 0,5 |
| **2** | AlCuFe | 10 | 22 | 20 | 30 | 11 | 2,3 | 1 | 9 | - | 4,4 | 0,5 |
| **3** | Ni-MoS2 | 10 | 22 | 20 | 30 | 21 | 3,0 | - | - | 0,5 | 3,1 | 0,8 |
| **4** | Ni-WS2 | 10 | 22 | 22 | 30 | 19 | 2,3 | - | - | 0,5 | 4,9 | 0,5 |
| **5** | AlCuFe + Ni-MoS2 | je 5 | 21,7 | 20 | 30 | 15 | 2,7 | 0,5 | 4,5 | 0,2 | 4,9 | 0,5 |

In Tabelle 2 sind die ermittelten Werte hinsichtlich Porösität und mechanischer Eigenschaften dargestellt.

**Tabelle 2: Schichteigenschaften nach dem HVOF-Spritzen**

| Versuch | Karbidanteil Soll | Festschmierstoff | Anteil Schmierstoff | Härte | Bruchzähigkeit K_{1C} | Porosität |
|---|---|---|---|---|---|---|
| # | (Gew%) | | Gew.% | HV0.1 | (MPa m)^{1/2} | % |
| 1 | 40 | - | 0 | 695 | 2,3 | <1 |
| 2 | 40 | AlCuFe | 10 | 705 | 5,9 | <2 |
| 3 | 40 | NI-MoS2 | 10 | 715 | 2,6 | <2 |
| 4 | 40 | NI-WS2 | 10 | 670 | 2,9 | <2 |
| 5 | 40 | AlCuFe + NI-MoS2 | je 5 | 643 | 3,5 | <2 |

Die Mikrostrukturaufnahmen (Fig. 1-4) einer gemäß Versuch #1 bis #4 erzeugten Schicht zeigt homogen verteilte Karbide, keine unaufgeschmolzenen Partikel und eine sehr dichte Schicht mit einer sehr geringen Porösität von < 2%.

Anhand von Tabelle 2 werden die folgenden Sachverhalte deutlich:
1. Die Porösität der mit Festschmierstoffen versehenen Eisen-basierten Schicht ändert sich nur sehr geringfügig.
2. Durch die Zugabe von Festschmierstoffen ändert sich ebenfalls die Härte nicht deutlich.
3. Die Zugabe von Festschmierstoffe verbessert die Bruchzähigkeit, wobei die Zugabe von 10 Gewichtsprozent AlCuFe die höchste Zunahme der Bruchzähigkeit, und damit den besten Widerstand gegen Materialermüdung liefert.

Eine Erhöhung der Schmierstoffkonzentration für WS₂ und MoS₂ je > 5 Gewichtsprozent sowie eine Erhöhung der AlCuFe-Konzentration > 20 Gewichtsprozent ist nicht zu empfehlen, da hier erwartet wird, dass der Verschleißwiderstand dadurch geringer wird.

Aus den Versuchsergebnissen wird deutlich, dass mittels dieses neuen Schichtsystems ein neuer Kolbenringtyp hergestellt wurde. Der Abscheidewirkungsgrad (DE-Wert) aller Schichtsysteme dieser Erfindung liegt bei ca. 50%.

Zu den vorstehend genannten Vorteilen eines mit einem erfindungsgemäßen Verfahren hergestellten Kolbenrings kommt hinzu, dass das neue Pulver etwa 30% günstiger als das heute zur Verfügung gestellte Mo-basierte Pulver ist.

## Patentansprüche

1. Spritzpulver für thermisches Spritzen, wobei das Pulver inklusive eines Anteils von 5-20 Gewichtsprozent an Feststoffschmierstoffen aus den Elementanteilen besteht:
15-30 Gewichtsprozent Eisen, Fe;
15-30 Gewichtsprozent Wolfram, W;
25-35 Gewichtsprozent Chrom, Cr;
10-35 Gewichtsprozent Nickel, Ni;
1-5 Gewichtsprozent Molybdän, Mo;
0,2-3 Gewichtsprozent Aluminium, Al;
3-20 Gewichtsprozent Kupfer, Cu;
1-10 Gewichtsprozent Kohlenstoff, C;
0,1-2 Gewichtsprozent Schwefel, S; und
0,1-2 Gewichtsprozent Silizium, Si.

2. Spritzpulver nach Anspruch 1, wobei das Pulver einen Anteil von 20-50 Gewichtsprozent Karbide mit den folgenden Konzentrationen enthält:
10-30 Gewichtsprozent Wolframkarbid, WC; und
5-20 Gewichtsprozent Cr₃C₂.

3. Spritzpulver nach einem der vorhergehenden Ansprüche, wobei das Pulver Festschmierstoffe enthält, die AlCuFe, MoS₂, WS₂ oder Gemische daraus umfassen, wobei der Anteil an Festschmierstoffen von 5-20 Gewichtsprozent aufgeteilt ist in die folgenden Anteile:
0-20 Gewichtsprozent AlCuFe;
0-5 Gewichtsprozent MoS₂; und
0-5 Gewichtsprozent WS₂.

4. Spritzpulver nach Anspruch 3, wobei die Festschmierstoffe AICuFe mit den folgenden Konzentrationen enthalten:
80-95 Gewichtsprozent Cu;
5-20 Gewichtsprozent Al;
1-5 Gewichtsprozent Fe; und
0,1-3 Gewichtsprozent Sauerstoff, O.

5. Spritzpulver nach einem der Ansprüche 3 oder 4, wobei der WS₂-Anteil 1,5-3,5 Gewichtsprozent beträgt und das WS₂ in eine Nickelmatrix eingebettet ist.

6. Spritzpulver nach einem der Ansprüche 3 bis 5, wobei der MoS₂-Anteil 1-2,5 Gewichtsprozent beträgt und das MoS₂ in eine Nickelmatrix eingebettet ist.

7. Spritzpulver nach einem der vorhergehenden Ansprüche, wobei die Partikelgrößen des Pulvers im Bereich 1-100 µm liegen.

8. Spritzpulver nach einem der Ansprüche 4 bis 9, wobei die Partikelgrößen der Festschmierstoffe im Bereich 1-150 µm liegen.

9. Spritzpulver nach einem der Ansprüche 2 bis 8, wobei die Karbide in einer NiCr-Matrix eingebettet sind und eine Partikelgröße von 0,5-5 µm aufweisen.

10. Kolbenring, umfassend ein Substrat und eine Beschichtung, die durch thermisches Spritzen eines Pulvers aufgebracht ist, wobei das Pulver inklusive eines Anteils von 5-20 Gewichtsprozent an Feststaffschmierstoffen aus den Elementanteilen besteht :
15-30 Gewichtsprozent Eisen, Fe;
15-30 Gewichtsprozent Wolfram, W;
25-35 Gewichtsprozent Chrom, Cr;
10-35 Gewichtsprozent Nickel, Ni;
1-5 Gewichtsprozent Molybdän, Mo;
0,2-3 Gewichtsprozent Aluminium, Al;
3-20 Gewichtsprozent Kupfer, Cu;
1-10 Gewichtsprozent Kohlenstoff, C;
0,1-2 Gewichtsprozent Schwefel, S; und
0,1-2 Gewichtsprozent Silizium.

11. Kolbenring nach Anspruch 10, wobei die Schichtdicke der Beschichtung im Bereich von 20-1000 µm liegt.

12. Kolbenring nach einem der Ansprüche 10 oder 11, wobei das thermische Spritzverfahren Hochgeschwindigkeits-Flammspritzen oder Plasmaspritzen umfasst.

13. Kolbenring nach einem der Ansprüche 10 bis 12, wobei die Härte der Beschichtung im Bereich von 600-1000 HV0.1 µm liegt.

14. Kolbenring nach einem der Ansprüche 10 bis 13, wobei die Bruchzähigkeit der Beschichtung im Bereich von 2,6-7,0 (MPa m)^{1/2} liegt.

15. Kolbenring nach einem der Ansprüche 10 bis 14, wobei der Kolbenring ein Guss- oder Stahlkolbenring ist.

## Claims

1. A spray powder for thermal spraying, wherein the powder including a proportion of 5-20% by weight of solid lubricants consists of the element proportions: 15-30% by weight of iron, Fe;
15-30% by weight of tungsten, W;
25-35% by weight of chromium, Cr;
10-35% by weight of nickel, Ni;
1-5% by weight of molybdenum, Mo;
0.2-3% by weight of aluminium, Al;
3-20% by weight of copper, Cu;
1-10% by weight of carbon, C;
0.1-2% by weight of sulphur, S; and
0.1-2% by weight of silicon, Si.

2. The spray powder according to claim 1, wherein the powder contains a proportion of 20-50% by weight of carbides with the following concentrations:
10-30% by weight of tungsten carbide, WC; and
5-20% by weight of Cr₃C₂.

3. The spray powder according to any one of the preceding claims, wherein the powder contains solid lubricants, which comprise AlCuFe, MoS₂, WS₂ or mixtures thereof, wherein the proportion of solid lubricants of 5-20% by weight is split up into the following proportions:
0-20% by weight of AlCuFe;
0-5% by weight of MoS₂; and
0-5% by weight of WS₂.

4. The spray powder according to claim 3, wherein the solid lubricants contain AlCuFe with the following concentrations:
80-95% by weight of Cu;
5-20% by weight of Al;
1-5% by weight of Fe; and
0.1-3% by weight of oxygen, O.

5. The spray powder according to any one of claims 3 or 4, wherein the WS₂ proportion amounts to 1.5-3.5% by weight and the WS₂ is embedded in a nickel matrix.

6. The spray powder according to any one of claims 3 to 5, wherein the MoS₂ proportion amounts to 1-2.5% by weight and the MoS₂ is embedded in a nickel matrix.

7. The spray powder according to any one of the preceding claims, wherein the particle sizes of the powder lie in the range 1-100 µm.

8. The spray powder according to any one of claims 4 to 9, wherein the particle sizes of the solid lubricants lie in the range 1-150 µm.

9. The spray powder according to any one of claims 2 to 8, wherein the carbides are embedded in a NiCr matrix and have a particle size of 0.5-5 µm.

10. A piston ring, comprising a substrate and a coating, which is deposited by thermal spraying of a powder, wherein the powder including a proportion of 5-20% by weight of solid lubricants consists of the element proportions:
15-30% by weight of iron, Fe;
15-30% by weight of tungsten, W;
25-35% by weight of chromium, Cr;
10-35% by weight of nickel, Ni;
1-5% by weight of molybdenum, Mo;
0.2-3% by weight of aluminium, Al;
3-20% by weight of copper, Cu;
1-10% by weight of carbon, C;
0.1-2% by weight of sulphur, S; and
0.1-2% by weight of silicon.

11. The piston ring according to claim 10, wherein the layer thickness of the coating lies in the range of 20-1000 µm.

12. The piston ring according to any one of claims 10 or 11, wherein the thermal spraying method comprises high-velocity flame spraying or plasma spraying.

13. The piston ring according to any one of claims 10 to 12, wherein the hardness of the coating lies in the range of 600-1000 HV0.1 µm.

14. The piston ring according to any one of claims 10 to 13, wherein the fracture toughness of the coating lies in the range of 2.6-7.0 (MPa m)^{1/2}.

15. The piston ring according to any one of claims 10 to 14, wherein the piston ring is a cast iron or steel piston ring.

## Revendications

1. Poudre à projeter destinée à la projection thermique, la poudre y compris une part de 5 à 20 pour cent en poids de lubrifiants solides étant composée des parts d'éléments suivantes :
de 15 à 30 pour cent en poids de fer, Fe ;
de 15 à 30 pour cent en poids de tungstène, W ;
de 25 à 35 pour cent en poids de chrome, Cr ;
de 10 à 35 pour cent en poids de de nickel, Ni ;
de 1 à 5 pour cent en poids de molybdène, Mo ;
de 0,2 à 3 pour cent en poids d'aluminium, Al ;
de 3 à 20 pour cent en poids de cuivre, Cu ;
de 1 à 10 pour cent en poids de carbone, C ;
de 0,1 à 2 pour cent en poids de soufre, S ; et
de 0,1 à 2 pour cent en poids de silicium, Si.

2. Poudre à projeter selon la revendication 1, la poudre contenant une part de 20 à 50 pour cent en poids de carbures, dans les concentrations suivantes :
de 10 à 30 pour cent en poids de carbure de tungstène, WC ; et
de 5 à 20 pour cent en poids de Cr₃C₂.

3. Poudre à projeter selon l'une quelconque des revendications précédentes, la poudre contenant des lubrifiants solides, qui comprennent de l'AlCuFe, du MoS₂, du WS₂ ou des mélanges de ces derniers, la part de lubrifiants solides étant de 5 à 20 pour cent en poids, répartie dans les parts suivantes :
de 0 à 20 pour cent en poids d'AlCuFe ;
de 0 à 5 pour cent en poids de MoS₂ ;
de 0 à 5 pour cent en poids de WS₂.

4. Poudre à projeter selon la revendication 3, les lubrifiants solides contenant de l'AlCuFe dans les concentrations suivantes :
de 80 à 95 pour cent en poids de Cu ;
de 5 à 20 pour cent en poids d'Al ;
de 1 à 5 pour cent en poids de Fe ; et
de 0,1 à 3 pour cent en poids d'oxygène, O.

5. Poudre à projeter selon l'une quelconque des revendications 3 ou 4, la part en WS₂ étant de 1,5 à 3,5 pour cent en poids et le WS₂ étant incorporé dans une matrice en nickel.

6. Poudre à projeter selon l'une quelconque des revendications 3 à 5, la part en MoS₂ étant de 1 à 2,5 pour cent en poids et le MoS₂ étant incorporé dans une matrice en nickel.

7. Poudre à projeter selon l'une quelconque des revendications précédentes, les tailles des particules de la poudre se situant dans l'ordre de 1 à 100 µm.

8. Poudre à projeter selon l'une quelconque des revendications précédentes, les tailles des particules des lubrifiants solides se situant dans l'ordre de 1 à 150 µm.

9. Poudre à projeter selon l'une quelconque des revendications 2 à 8, les carbures étant incorporés dans une matrice en NiCr et présentant une taille des particules de 0,5 à 5 µm.

10. Segment de piston comprenant un substrat et un revêtement qui est appliqué par projection thermique d'une poudre, la poudre y compris ne part de 5 à 20 pour cent de lubrifiants solides étant composée des parts d'éléments suivantes :
de 15 à 30 pour cent en poids de fer, Fe ;
de 15 à 30 pour cent en poids de tungstène, W ;
de 25 à 35 pour cent en poids de chrome, Cr ;
de 10 à 35 pour cent en poids de de nickel, Ni ;
de 1 à 5 pour cent en poids de molybdène, Mo ;
de 0,2 à 3 pour cent en poids d'aluminium, Al ;
de 3 à 20 pour cent en poids de cuivre, Cu ;
de 1 à 10 pour cent en poids de carbone, C ;
de 0,1 à 2 pour cent en poids de soufre, S ; et
de 0,1 à 2 pour cent en poids de silicium, Si.

11. Segment de piston selon la revendication 10, l'épaisseur de couche du revêtement se situant dans l'ordre de 20 à 100 µm.

12. Segment de piston selon l'une quelconque des revendications 10 ou 11, le procédé de projection thermique comprenant une projection par flamme à haute vitesse ou une projection plasma.

13. Segment de piston selon l'une quelconque des revendications 10 à 12, la dureté du revêtement se situant dans l'ordre de 600 à 1000 HV0.1 µm.

14. Segment de piston selon l'une quelconque des revendications 10 à 13, la résistance à la rupture du revêtement se situant dans l'ordre de 2,6 à 7,0 (MPa m)^{1/2}.

15. Segment de piston selon l'une quelconque des revendications 10 à 14, le segment de piston étant un segement de piston en fonte ou en acier.
